# EUROPÄISCHE PATENTANMELDUNG

(11) **EP 1 018 294 A1**
(43) Veröffentlichungstag der Anmeldung: **12.07.2000**
(21) Anmeldenummer: 99121943.7
(22) Anmeldetag: 08.11.1999
(51) Int. Cl.: A01D 75/28

(54) **Antriebsachse für Fahrzeuge**

(30) Priorität: 07.01.1999 DE 19900212
(71) Anmelder: SAME DEUTZ-FAHR S.P.A., 24047 Treviglio (Bergamo) (IT)
(72) Erfinder: Staudinger, Ingo, 89426 Wittislingen (DE)
(74) Vertreter: Dreiss, Fuhlendorf, Steimle & Becker

(57) **Zusammenfassung**

Die Erfindung betrifft eine Antriebsachse für einen Mähdrescher mit Hangausgleich, wobei die schwenkbaren Endgetriebe (10) über einen Federspeicher (23) gefedert sind.

## Beschreibung

Die Erfindung betrifft eine Achse, insbesondere eine Antriebsachse für Fahrzeuge, vorzugsweise für selbstfahrende Erntemaschinen, wie Mähdrescher, die mit einem Hangausgleich ausgerüstet sind, mit einem Achstragkörper, einem Zentralgetriebe und zwei mit diesem durch Ausgleichswellen über je eine Eingangswelle verbundene Endgetriebe, die in koaxial zu den Eingangswellen am Achstragkörper befestigten Lagern gelagert und mittels wenigstens eines Hydraulikzylinders schwenkbar gelagert sind, wobei an zu den Eingangswellen parallel versetzten Abtriebswellen die Antriebsräder befestigt sind. Die Erfindung betrifft außerdem eine Achse für Fahrzeuge, vorzugsweise für selbstfahrende Erntemaschinen, wie Mähdrescher, die mit einem Hangausgleich ausgerüstet sind, mit einem Achstragkörper, zwei Lagern mit Wellen, wobei die Lager mittels wenigstens einem Hydraulikzylinder schwenkbar gelagert sind, und an den Wellen die Räder befestigt sind.

Vor allem Mähdrescher benötigen zur optimalen Funktion Ihrer Einzelaggreate eine waagerechte Stellung und zwar unabhängig von der Topografie des Ackers. In der DE 197 15 837 A1 ist ein Fahrzeug mit einer Antriebsachse beschrieben, an deren Enden unter Zwischenschaltung einer Schwenkvorrichtung End- oder Vorgelegegetriebe angeschraubt sind. Die Schwenkvorrichtung, die dem Hangausgleich dient, weist je einen Hydraulikzylinder auf, über den das jeweilige Vorgelegegetriebe um dessen Eingangswelle verschwenkt werden kann. Auf diese Weise kann die Bodenfreiheit des Fahrzeugs variiert und dadurch die seitliche Neigung des Fahrzeugs werden.

Es hat sich gezeigt, dass derartige Mähdrescher auch bei unebenem Gelände optimal betrieben werden können, dass die Fahrgeschwindigkeit dieser Mähdrescher jedoch im Straßeneinsatz aufgrund der ungefederten Antriebsachse auf 20 km/h beschränkt sind. Die einzige Federung derartiger Fahrzeuge wird durch den Reifen selbst erzielt.

Bei Straßenfahrt befinden sich die Vorgelegegetriebe in ihrer einen Schwenk-Endlage, die in der Regel der abgesenkten Lage des Fahrzeugs entspricht. Fährt das Fahrzeug über einen festen Untergrund, dann belasten die Vibrationen, die aus den Stollen der Räder herrühren, sehr stark die Gleitlager der Schwenkgetriebe in der Antriebsachse. Da die Gleitlager bei Straßenfahrt nicht bewegt werden, geht nach kurzer Straßenfahrt der Schmierfilm verloren und die Lebensdauer der Lager leidet erheblich. Außerdem hat sich gezeigt, dass insbesondere bei schweren Vorsatzgeräten und bei großvolumigen Reifen das Fahrzeug während der Fahrt zum Schwingen neigt. Der Bodenkontakt der Räder geht somit verloren und die Lenkbarkeit des Fahrzeugs ist nicht mehr gegeben.

Der Erfindung liegt daher die Aufgabe zugrunde, bei einem Fahrzeug der eingangs genannten Art die Antriebsachse derart auszugestalten, dass die Fahrsicherheit erhöht wird, dass Lagerschäden weitestgehend vermieden werden und ein besserer Komfort bei Straßenfahrt ermöglicht wird.

Diese Aufgabe wird erfindungsgemäß dadurch gelöst, dass im Hydraulikkreislauf für wenigstens einen Hydraulikzylinder ein Federspeicher vorgesehen ist.

Die erfindungsgemäße Antriebsachse, bei der die Endgetriebe bzw. die Vorgelegegetriebe über Hydraulikzylinder um die Achse der Eingangswellen verschwenkt werden können, weist eine Federung auf, indem im Hydraulikkreis für wenigstens einen Hydraulikzylinder, insbesondere für beide Hydraulikzylinder ein Federspeicher vorgesehen ist. Dieser Federspeicher ermöglicht einen Druckausgleich im Hydraulikkreislauf und dadurch ein federndes Verschwenken der Endgetriebe um deren Schwenkachsen. Der Einbau dieser Federung hat den wesentlichen Vorteil, dass das Fahrzeug bei Straßenfahrt mit doppelter Geschwindigkeit, nämlich mit 40 km/h fahren darf und die Federung nicht nur durch die Luftfüllung des Reifens bewirkt wird. Ein weiterer Vorteil wird darin gesehen, dass nun anstelle der Reifen auch Raupen an den Flanschen der Abtriebswellen der Endgetriebe befestigt werden können. Die Raupen, die selbst keinerlei Federung besitzen, werden in der Regel bei weichem Geländer eingesetzt.

Von Vorteil ist außerdem, dass, insbesondere bei Straßenfahrt, die Lager aufgrund der Federung ständig in Bewegung sind, so dass keine Lagerschäden aufgrund einseitiger Belastung zu befürchten sind. Durch die Bewegung der Lagerbolzen innerhalb der Lagerschale wird ständig Schmiermittel in den Tragbereich des Lagers transportiert. Weiterhin ist ein wesentlich verbesserter Bodenkontakt, insbesondere bei schweren Vorsatzgeräten und bei großvolumigen Reifen zu verzeichnen. Außerdem ist trotz des Gasspeichers, der keine Einschränkung des Hangausgleichs darstellt, das Fahrzeug gleichermaßen zu bedienen, wie ohne Federung.

Mit Vorzug ist der Federspeicher ein Hydrospeicher oder ein Gasfederspeicher, der im Hydraulikkreislauf vorgesehen ist. Dabei kann der Gasfederspeicher entweder auf einen Hydraulikzylinder oder auf beide Hydraulikzylinder wirken.

Eine Weiterbildung sieht vor, dass der Federspeicher zu- und abschaltbar ist. Insbesondere bei Straßenfahrt wird der Federspeicher zugeschaltet und während des Betriebes des Fahrzeugs auf dem Acker in der Regel abgeschaltet.

Um Schwingungen möglichst rasch abzubauen weist der Federspeicher erfindungsgemäß ein Dämpfungselement auf. Dieses Dämpfungselement kann als passives Dämpfungselement oder auch als aktives Dämpfungselement ausgebildet sein, wobei dann der Federspeicher aktiv ansteuerbar ist. Diese Ansteuerung kann u.a. auch von der Fahrsituation, von der Fahrbahnoberfläche bzw. -beschaffenheit usw. abhängig sein.

Eine weitere Ausführungsform sieht vor, dass der Federspeicher eine einstellbare Federkennlinie besitzt. Durch diese Maßnahme kann der Federspeicher exakt auf das Gewicht des Fahrzeugs, was insbesondere durch das Gewicht des Vorsatzgerätes stark variieren kann, eingestellt werden.

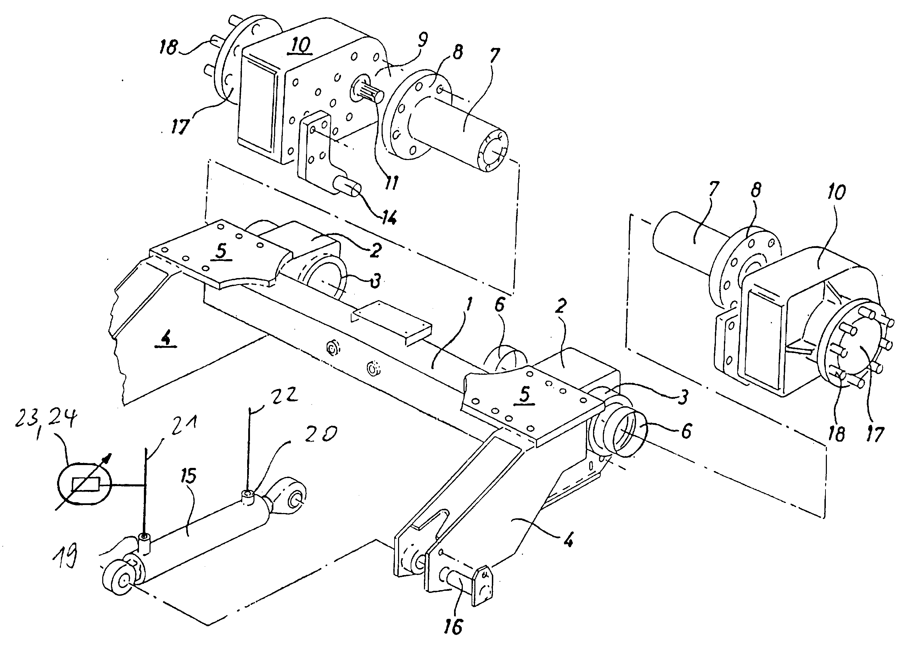

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im einzelnen beschrieben ist. Dabei können die in der Zeichnung dargestellten und in den Ansprüchen sowie in der Beschreibung erwähnten Merkmale jeweils einzeln für sich oder in beliebiger Kombination erfindungswesentlich sein.

Die Zeichnung zeigt eine Antriebsachse mit Hangausgleich, die einen Achstragkörper 1 aufweist, an dessen beiden Enden ein Lager 2 mit einer Lagerbüchse 3 und eine Konsole 4 angeschweißt sind. Eine Platte 5 dient zur Befestigung der Antriebsachse am Mähdrescher und zur optimalen Befestigung von Lager 2 und Konsole 4 am Achstragkörper 1. In der Lagerbüchse 3 sind Lagerschalen 6 vorgesehen, die zur Lagerung eines Hohlwellenstücks 7 dienen. Dieses wird mittels eines Flansches 8 an einer Befestigungsfläche 9 eines Endgetriebes 10 angeschraubt und zwar koaxial zu einer Eingangswelle 11. Diese dient der Verbindung mit einem Zentralgetriebe über entsprechende Verbindungswellen (nicht dargestellt). Die Lage der Hohlwellenstücke 7 erlaubt ein für die Verbindungswellen zwangfreies Schwenken der Endgetriebe 10. An der Befestigungsfläche 9 wird ferner ein Lagerzapfen 14 angeschraubt, an dem ein Hydraulikzylinder 15 angreift, dessen anderes Ende sich an einem Lagerbolzen 16 der Konsole 4 schwenkbar abstützt.

Die Endgetriebe 10 weisen eine Ausgangswelle 17 auf, die parallel zur Eingangswelle 11 und versetzt zu dieser ist und an der Gegenseite zur Eingangswelle 11 auftritt. Sie dient zur Befestigung der nicht dargestellten Räder, die mit Stehbolzen 18 an der Ausgangswelle 17 angeschraubt werden. Durch die Betätigung der Hydraulikzylinder 15 werden die Endgetriebe 10 und die Räder um die Achse der Hohlwellenstücke 7 in der Lagerbüchse 3 je nach Neigung des Mähdreschers gegensinnig verschwenkt und bewirken so dessen horizontale Lage.

Der Hydraulikzylinder 15 weist zwei Anschlüsse 19 und 20 auf, die mit Hydraulikleitungen 21 und 22 verbunden sind. In wenigstens einer der Hydraulikleitungen 21 und 22 (beim dargestellten Ausführungsbeispiel in der Hydraulikleitung 21) ist ein als Federspeicher 23 ausgeführter Gasfederspeicher 24 angeschlossen, wobei der Gasfederspeicher 24 in seiner Kennlinie einstellbar ist und eine Dämpfung aufweist. Auf diese Weise kann die Schwenkbewegung der beiden Endgetriebe 10 gefedert und gedämpft werden.

Während der Straßenfahrt befinden sich die beiden Endgetriebe 10 z.B. in einer Mittelstellung und der Gasfederspeicher 24 ist zugeschaltet. Beim Arbeitseinsatz auf dem Acker nehmen die Engetriebe 10 die jeweils erforderliche Lage ein, so dass das Fahrzeug ausbalanciert ist. Dabei ist der Gasfederspeicher 24 ausgeschaltet.

## Patentansprüche

1. Antriebsachse für Fahrzeuge, vorzugsweise für selbstfahrende Erntemaschinen, wie Mähdrescher, die mit einem Hangausgleich ausgerüstet sind, mit einem Achstragkörper (1), einem Zentralgetriebe und zwei mit diesem durch Antriebswellen über je eine Eingangswelle (11) verbundene Endgetriebe (10), die in koaxial zu den Eingangswellen (11) am Achstragkörper (1) befestigten Lagern (2) gelagert und mittels wenigstens einem Hydraulikzylinder (15) schwenkbar gelagert sind, wobei an zu den Eingangswellen (11) parallel versetzten Abtriebswellen (17) die Antriebsräder befestigt sind, **dadurch gekennzeichnet**, dass im Hydraulikkreislauf für wenigstens einen Hydraulikzylinder (15) ein Federspeicher (23) vorgesehen ist.

2. Antriebsachse nach Anspruch 1, dadurch gekennzeichnet, dass der Federspeicher (23) ein Hydrospeicher oder ein Gasfederspeicher (24) ist.

3. Antriebsachse nach einem der vorhergehenden Ansprüche, dadurch gekennzeichnet, dass der Federspeicher (23) zu- und abschaltbar ist.

4. Antriebsachse nach einem der vorhergehenden Ansprüche, dadurch gekennzeichnet, dass der Federspeicher (23) ein Dämpfungselement aufweist.

5. Antriebsachse nach einem der vorhergehenden Ansprüche, dadurch gekennzeichnet, dass der Federspeicher (23) eine einstellbare Federkennlinie besitzt.

6. Antriebsachse nach einem der vorhergehenden Ansprüche, dadurch gekennzeichnet, dass der Federspeicher (23) aktiv ansteuerbar ist.

7. Antriebsachse nach einem der vorhergehenden Ansprüche, dadurch gekennzeichnet, dass der Federspeicher (23) einen begrenzbaren Federbereich aufweist.

8. Achse für Fahrzeuge, vorzugsweise für selbstfahrende Erntemaschinen, wie Mähdrescher, die mit einem Hangausgleich ausgerüstet sind, mit einem Achstragkörper (1), zwei Lagern (2) mit Wellen (17), wobei die Lager (2) mittels wenigstens einem Hydraulikzylinder (15) schwenkbar gelagert sind, und an den Wellen (17) die Räder befestigt sind, dadurch gekennzeichnet, dass im Hydraulikkreislauf für wenigstens einen Hydraulikzylinder (15) ein Federspeicher (23) vorgesehen ist.

9. Achse nach einem der vorhergehenden Ansprüche, dadurch gekennzeichnet, dass die Räder über einen Radnabenantrieb angetrieben werden.
